Europäisches Patentamt

European Patent Office

Office européen des brevets

(19)

(11) **EP 0 677 230 B1**

(12) **FASCICULE DE BREVET EUROPEEN**

(45) Date de publication et mention
de la délivrance du brevet:
**21.04.1999 Bulletin 1999/16**

(51) Int Cl.⁶: **H04N 9/31**, G02B 5/32,
G02B 27/28

(21) Numéro de dépôt: 95900173.6

(22) Date de dépôt: **28.10.1994**

(86) Numéro de dépôt international:
**PCT/FR94/01258**

(87) Numéro de publication internationale:
**WO 95/12286 (04.05.1995 Gazette 1995/19)**

(54) **DISPOSITIF DE VISUALISATION COULEURS ET PROCEDE DE REALISATION**

FARBANZEIGEGERÄT UND HERSTELLUNGSVERFAHREN

COLOUR DISPLAY DEVICE AND METHOD FOR PRODUCING SAME

(84) Etats contractants désignés:
**DE GB NL**

(30) Priorité: **29.10.1993 FR 9312949**

(43) Date de publication de la demande:
**18.10.1995 Bulletin 1995/42**

(73) Titulaire: **THOMSON-CSF
75008 Paris (FR)**

(72) Inventeurs:
• **JOUBERT, Cécile
F-92402 Courbevoie Cédex (FR)**
• **LOISEAUX, Brigitte
F-92402 Courbevoie Cédex (FR)**
• **DELBOULBE, Anne
F-92402 Courbevoie Cédex (FR)**
• **HUIGNARD, Jean-Pierre
F-92402 Courbevoie Cédex (FR)**

(56) Documents cités:
**WO-A-89/02612          WO-A-92/09915**

## Description

L'invention concerne un dispositif de visualisation couleurs pour projecteur monovalve, notamment un dispositif trichrome, et son procédé de réalisation.

Pour obtenir des images vidéo de grandes dimensions, une solution alternative au tube cathodique, qui devient alors lourd et encombrant, est la projection utilisant des valves à cristal liquide (Liquid Crystal Display ou LCD). Un projecteur LCD fonctionne selon le principe d'un projecteur de diapositives, la ou les valves LCD remplaçant les diapositives.

L'image couleur peut être obtenue, soit à partir de trois écrans monochromes éclairés chacun par une des trois primaires rouge, verte ou bleue, soit par une valve unique dont les pixels (éléments images) sont munis de filtres colorés qui ne transmettent qu'une des primaires. Un point couleur est alors constitué de trois sous pixels monochromes.

L'architecture d'un projecteur monovalve, qui utilise une valve unique à filtres colorés, est très simple. Elle comporte une lampe, une valve LCD et un objectif de projection. Mais elle possède également un certain nombre d'inconvénients dont :

- un faible rendement lumineux : 2/3 de la lumière environ est arrêtée par les filtres colorés qui ne laissent passer qu'une seule couleur pour laquelle ils ont, de plus, une absorption non négligeable ;
- la valve LCD est difficile à réaliser, compte tenu de la technologie délicate des filtres colorés qui sont insérés à l'intérieur de la cellule à cristal liquide.

On connaît également les systèmes de visualisation à modulateur spatial unique mais ils utilisent des dispositifs de focalisation (matrices de lentilles) nécessitant une lentille par sous-pixel monochrome (voir documents WO 92/09915 et WO 89/02612).

L'invention concerne un dispositif de visualisation couleurs à modulateur spatial unique permettant de pallier ces inconvénients.

L'invention concerne donc un dispositif de visualisation couleurs, caractérisé en ce qu'il comporte :

- au moins une source lumineuse (S) émettant un faisceau comportant au moins deux longueurs d'ondes primaires ($\lambda_0$, $\lambda_1$, $\lambda_2$) ;
- un réseau (MLH) de lentilles holographiques (LH) ;
- un modulateur spatial de lumière (LCD), comportant un pixel par lentille, chaque pixel comportant un sous-pixel par longueur d'onde primaire à visualiser ;

   chaque lentille (LH) du réseau (MLH) dispersant les différentes longueurs d'ondes dudit faisceau de façon à étaler spatialement le spectre du faisceau et focalisant chaque longueur d'onde primaire dans un sous-pixel d'un pixel.

L'invention concerne également un procédé de réalisation d'un dispositif de visualisation couleurs, caractérisé en ce que :

- on réalise une couche d'un matériau holographique ;
- on fait interférer dans la couche de matériau holographique une première onde lumineuse de référence (OP) et au moins une onde lumineuse cylindrique ou sphérique (OS) toutes deux de même longueur d'onde d'enregistrement réalisant ainsi au moins une lentille holographique (LH) pouvant être relu par une deuxième onde lumineuse à une autre longueur d'onde dans des conditions proches des conditions de Bragg ;
- on associe un modulateur spatial de lumière (LCD) dans le plan de focalisation de la lentille holographique correspondant à une longueur d'onde choisie, ledit modulateur spatial comportant autant de pixels qu'il y a de lentilles (LH), chaque pixel comportant autant de sous-pixels qu'il y a de couleurs primaires, le sous-pixel central de chaque pixel étant situé au point de focalisation de l'onde ayant une longueur d'onde sensiblement équivalente à la longueur d'onde centrale du spectre visible et le plan du modulateur spatial de lumière étant perpendiculaire à l'axe optique de cette onde.

Les différents objets et caractéristiques de l'invention apparaîtront plus clairement dans la description qui va suivre faite à titre d'exemple et dans les figures annexées qui représentent :

- la figure 1, un exemple de réalisation du dispositif selon l'invention ;
- la figure 2a, un procédé d'enregistrement d'un réseau de lentilles holographiques ;
- la figure 2b, la lecture du matériau enregistré en figure 2a ;
- les figures 3 et 4, la lecture avec diverses longueurs d'ondes d'une lentille enregistrée ;
- la figure 5, une coupe transversale dans le plan du modulateur spatial de lumière d'un faisceau trichrome après traversée d'une lentille holographique selon l'invention ;
- les figures 6 à 8, l'application de l'invention à des quads.

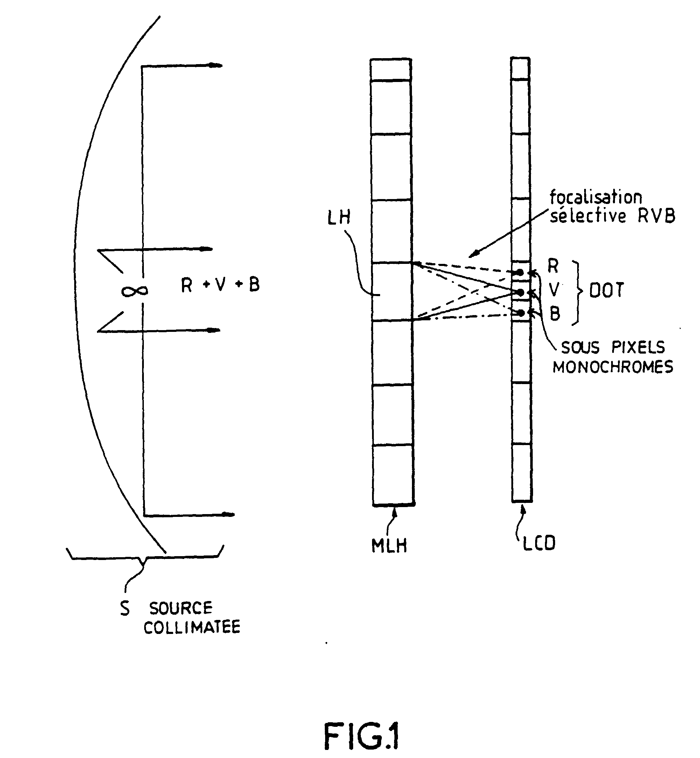

En se reportant à la figure 1, on va donc décrire un exemple de réalisation du dispositif de l'invention.

Ce dispositif comporte :

- une source blanche S comportant un système optique de l'art connu pour collimater la lumière émise par la source ;
- une matrice MLH de micro-lentilles holographiques LH permettant de réaliser la focalisation sélective de différentes longueurs d'ondes contenues dans la lumière émise par la source. De préférence, ces longueurs d'ondes correspondent au rouge, au vert et au bleu. La matrice MLH est avantageusement une matrice de lentilles sphériques.

- un modulateur spatial de lumière tel qu'une valve à cristal liquide LCD commandée par des signaux vidéo trichromes RVB appliqués aux sous-pixels qui le constitue mais dépourvu de filtres colorés. Plus précisément sur le trajet de chaque faisceau correspondant chacun à une primaire focalisée par une lentille de la matrice se trouve un sous-pixel d'un point couleur.

Rappelons que dans les écrans trichromes un pixel (élément image) émettant un faisceau de lumière quelconque est constitué de trois sous pixels rouge, vert, bleu. Un tel pixel est généralement nommé dot.

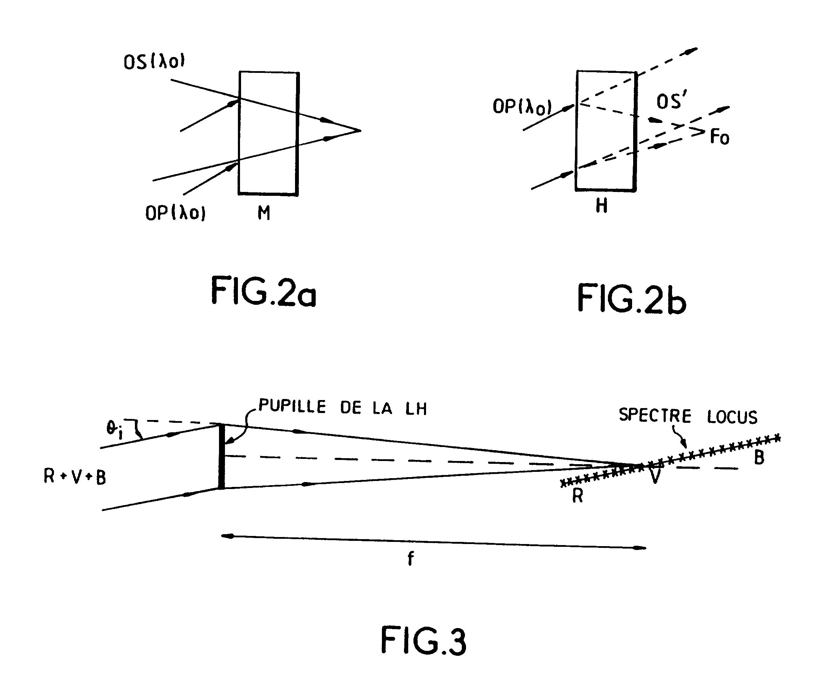

Pour une application courante, la matrice MLH de lentilles holographiques LH est unique et possède une bande passante spectrale couvrant tout le spectre visible. Une lentille élémentaire LH possède une pupille équivalente à un dot. Elle est réalisée en enregistrant la figure d'interférence entre, par exemple, une onde plane OP et une onde cylindrique ou sphérique OS monochromatiques toutes deux d'une première longueur d'onde $\lambda_0$ dans un matériau photosensible M qui transforme la modulation d'intensité lumineuse en une modulation de son indice de réfraction (figure 2a).

Après développement, la lentille élémentaire LH éclairée par une onde plane identique à l'onde OP (en angle d'incidence et longueur d'onde), diffracte l'onde OS' avec une efficacité $\eta$ pouvant aller jusqu'à 100 %. Cette onde plane peut être similaire en direction à l'onde lumineuse de référence OP. La lentille LH fonctionne alors aux conditions de Bragg (voir figure 2b). L'onde OS focalise en un point FO. Les paramètres du matériau à optimiser pour obtenir une forte efficacité sont l'épaisseur d, la modulation d'indice $\Delta$n et le pas moyen du réseau enregistré.

Si on éclaire la lentille LH avec un faisceau OP de même incidence mais ayant une autre longueur d'onde $\lambda_1 \neq \lambda_0$. L'onde diffractée focalise en un point différent du point focal $F_0$ correspondant à l'onde OS'. Cette dispersion chromatique du composant a donc pour effet d'étaler spatialement le spectre d'un faisceau OP dans le focus. L'ensemble des foyers correspondant aux longueurs d'ondes visibles est situé le long d'une courbe appelée spectre locus. La figure 3 donne à titre d'exemple une coupe du spectre locus.

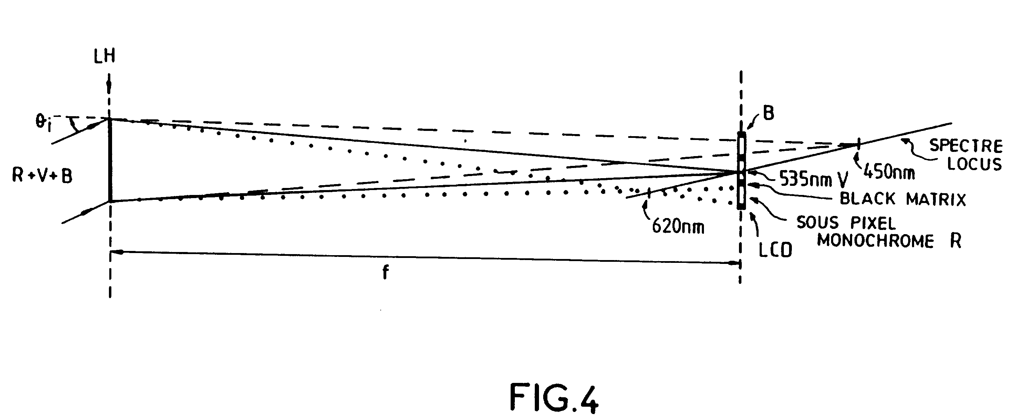

L'invention exploite cette propriété pour séparer les trois primaires sur les trois sous pixels d'un dot d'un écran LCD comme cela est représenté en figure 4. Les paramètres géométriques de la lentille sont dans ce cas calculés pour que la position des points focaux associés aux bandes rouge, verte et bleue coïncide avec celle des sous pixels correspondants. Pour une lentille de pupille donnée les paramètres à adapter sont l'angle d'incidence de l'onde plane appelé angle de hors d'axe

$\theta$i et la focale f.

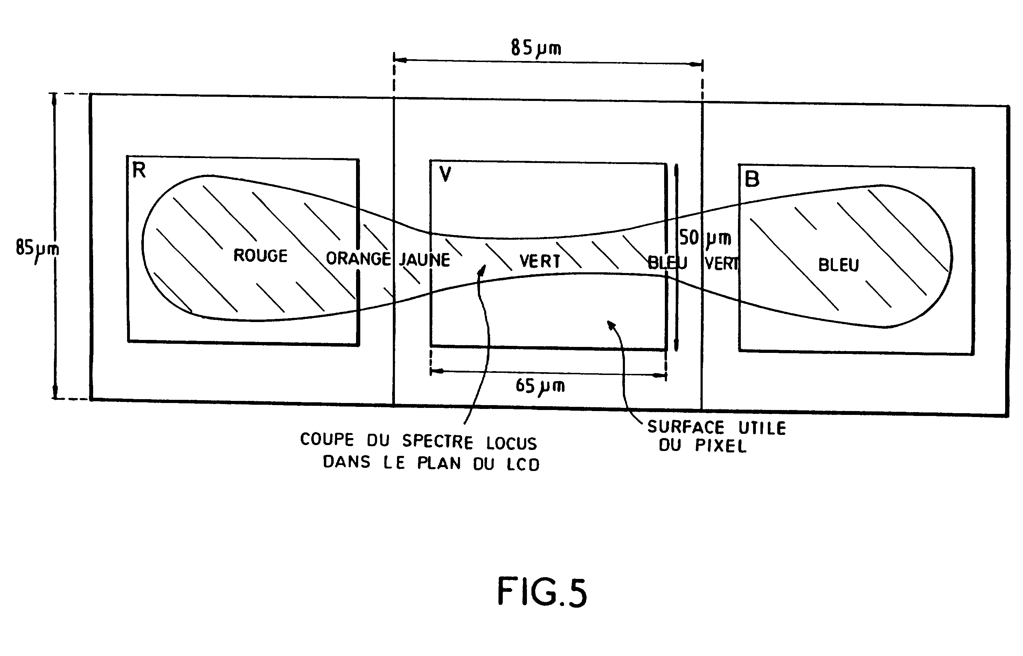

La black matrix dans ce cas peut être utilisée ou éventuellement précalculée de manière à réaliser une partie ou la totalité du filtrage spectral colorimétrique de la source (cf. figures 4 et 5).

Nous décrirons ici un exemple de dispositif associé à un exemple d'écran à cristal liquide possédant des sous pixels rouges, verts, bleus (RVB) répartis en bandes verticales.

Caractéristiques de l'écran à cristal liquide

- format 16/9
- diagonale D = 3,7 inches soit un écran de 46 mm de hauteur et 82 mm de longueur ;
- répartition des pixels sur 560 lignes de 320 dots RVB (960 sous pixel). La taille des sous pixels correspondante est donc 85 x 85 µm.
- taux d'ouverture du pixel, au travers duquel la lumière est transmise, de 45 % dans la géométrie de pixel décrite sur la figure 5. La surface utile d'un sous pixel est de 65µm horizontalement et de 50 µm verticalement.

Paramètres géométriques de la lentille holographique

Paramètres géométriques : $\Theta$i et f

La hauteur de la pupille $\Phi$ d'une lentille élémentaire de la matrice de lentilles holographiques MLH correspond à la hauteur de 3 pixels soit dans l'exemple 3 x 85 µm. Dans cet exemple la distance focale sera au moins égale à 1100 µm, épaisseur standard actuelle de la contre lame de l'écran à cristal liquide LCD.

La figure 4 représente le point de fonctionnement associé à l'écran à cristal liquide LCD choisi dans l'exemple :

- $\Theta$i = 15°
- f = 8 x $\Phi$ = 2040 µm
- le point focal sur l'axe correspond à $\lambda$ = 535 nm

La dispersion est adaptée pour répartir spatialement chaque bande spectrale dans un sous pixel. La figure 5 montre la coupe du plan focal dans le plan de l'écran LCD.

Selon une réalisation préférée de l'invention, pour visualiser à l'aide d'une gamme de longueurs d'ondes comprises entre deux longueurs d'ondes $\lambda_1$ et $\lambda_2$ (par exemple, $\lambda_1 = 620$ nm et $\lambda_2 = 450$ nm), on enregistre chaque lentille LH de la matrice MLH avec des faisceaux lumineux OP et OS de longueur d'onde $\lambda_0$ sensiblement égale à la moyenne des longueurs d'ondes $\lambda_1$ et $\lambda_2$ (selon l'exemple pris $\lambda_0 \approx \frac{620+450}{2} = 535$ nm). Selon une réalisation préférée, l'axe du faisceau OS est perpendiculaire au plan de la matrice MLH. Ensuite, pour la visualisation d'un écran à cristal liquide, on place l'écran à cristal liquide LCD tel que chaque sous pixel destiné à moduler la longueur $\lambda_0$ soit situé au point de focalisation de l'onde à la longueur d'onde $\lambda_0$ transmise par chaque lentille. De plus l'écran à cristal liquide peut être orienté sensiblement selon un plan perpendiculaire à l'axe optique de chaque lentille LH. Un dot sera donc constitué d'un sous pixel central V dans lequel viendra se focaliser la lumière au voisinage de la longueur $\lambda_0$ et de deux pixels latéraux R et B recevant sensiblement la même quantité de lumière aux longueurs d'ondes voisines respectivement de $\lambda_1$ et $\lambda_2$.

Selon une variante de réalisation, la matrice de lentilles holographiques est en fait un réseau de lentilles cylindriques parallèles juxtaposées. Chaque lentille transmet donc pour chaque longueur d'onde un faisceau plat de lumière. Pour une lentille LH, par exemple, le faisceau a la longueur d'onde $\lambda_0$ se focalise selon une ligne située dans le plan de l'écran LCD. Les sous pixels V de l'écran LCD sont alors alignés selon cette ligne. Les faisceaux de longueur $\lambda_1$ et $\lambda_2$ sont parallèles au faisceau de longueur d'onde $\lambda_0$. Les sous pixels R et B sont disposés selon des lignes parallèles à la ligne de sous pixels V et de part et d'autre de cette ligne.

Dans ce qui précède, on a considéré que l'écran LCD est un écran à cristal liquide, mais il pourrait être tout autre dispositif de modulateur spatial de lumière.

Paramètres du matériau holographique

On cherche à obtenir pour la lentille LH une bande passante $\Delta\lambda$ égale à tout le spectre visible avec un maximum d'efficacité de 100 % à une longueur d'onde optimisée pour la colorimétrie, par exemple la longueur d'onde centrale verte de 535 nm. A titre d'exemple, et pour le point de fonctionnement précédent, on pourra choisir le couple ($\Delta n$, d) suivant :

- d = 10 μm
- $\Delta n = 0.025$

Ces valeurs sont compatibles avec les matériaux holographiques tels la gélatine bichromatée ou les photopolymères.

Le dispositif d'éclairage du LCD proposé ici permet de réaliser un projecteur monovalve en l'associant à un objectif de projection.

Pour optimiser le flux projeté, il peut être nécessaire d'inclure dans le dispositif de projection soit une lentille de champ derrière le LCD soit une deuxième matrice de lentilles LH positionnée après l'écran LCD, chacune des lentilles LH jouant le rôle de lentille de champ.

Le système peut être adapté à toute configuration de pixels couleur (delta etc...) dès l'instant où on a une direction selon laquelle les sous pixels d'une même couleur sont alignés.

L'invention peut s'appliquer également aux écrans à vision directe.

On peut généraliser le dispositif de l'invention à tout dispositif incluant un écran LCD sans filtres colorés et :

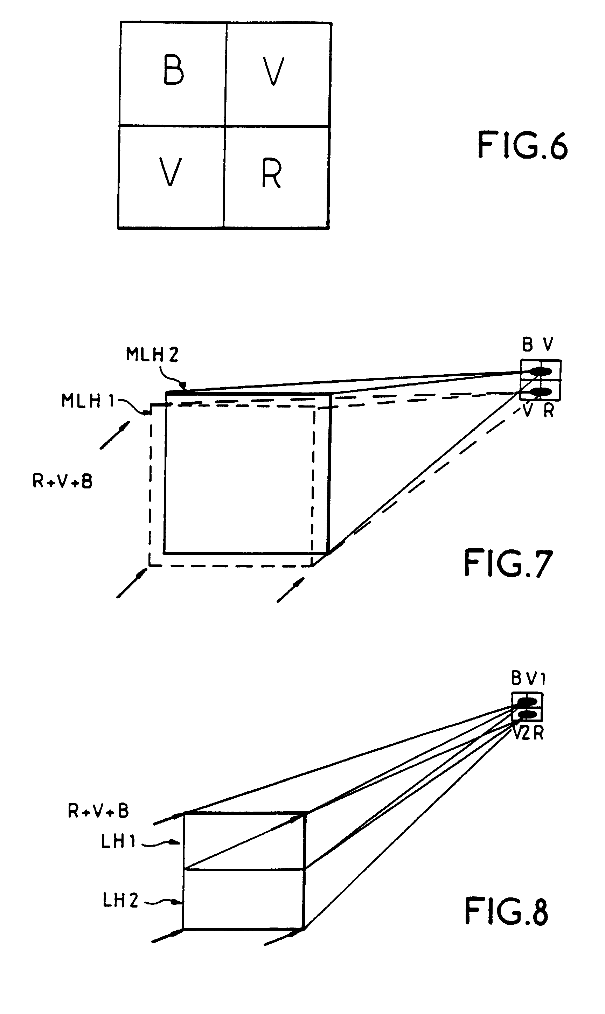

- soit un nombre de matrices de LH inférieur au nombre de sous pixels constituant un dot blanc. Par exemple pour la structure en quad (voir figure 6), on peut superposer 2 matrices MLH1 et MLH2 (cf. figure 7), l'une diffractant 100 % de rouge et 50 % de vert (MLH1) et l'autre 100 % de bleu et 50 % de vert (MLH2),

- soit une matrice unique mais dont chaque lentille est constituée de plusieurs LH. Par exemple pour une structure de pixels en quad le motif élémentaire de la matrice peut être constitué (voir figure 8) d'une lentille LH1 dispersant le bleu et le vert et d'une LH2 dispersant le rouge et le vert, chacune ayant une bande passante spectrale adaptée. Notons que dans ce cas la moitié du bleu et du rouge est perdue.

Dans le dispositif de la figure 7, les deux matrices de lentilles holographiques MLH1 et MLH2 sont de caractéristiques différentes. Elles sont enregistrées séparément de telle façon que, mises en combinaison comme cela est représenté sur la figure 7, elles permettent par exemple la visualisation de quads tel que celui représenté en figure 6

Le dispositif de la figure 8 est en un seul matériau. Cependant l'équivalent de chaque lentille LH faisant l'objet de la description faite précédemment en relation avec les figures 1 à 5 est enregistrée sous la forme de deux lentilles LH1 et LH2 accolées. La bande passante de la lentille LH1 est calculée pour qu'elle focalise uniquement les longueurs d'ondes situées dans la gamme du bleu et les longueurs d'ondes situées dans la gamme du vert. A la lecture la lentille diffractera donc la lumière vers le point V1 pour la lumière de longueur d'onde V et vers le point B pour la lumière de longueurs d'ondes B.

La bande passante de la lentille LH2 est calculée pour qu'elle focalise uniquement les longueurs d'ondes situées dans la gamme du rouge et celles situées dans la gamme du vert. A la lecture, la lentille LH2 transmettra donc les longueurs d'ondes V et R respectivement vers les points V2 et R. Sur la figure 8 on voit que les points B, V1, V2, R réalisant le quad de la figure 6. Dans ce cas, notons que la partie rouge non diffractée par LH1 et la partie bleue non diffractée par LH2 sont perdues.

L'invention décrite permet ainsi de réaliser simultanément la focalisation sélective de chaque primaire de la source vers le sous pixel adressé par le signal vidéo lui correspondant avec une seule matrice de lentilles holographiques. L'invention permet d'obtenir un gain en luminosité de 4 à 8 dans un projecteur monovalve en remplaçant la matrice de filtres colorés d'un écran LCD à commande électrique trichrome, par une matrice unique de microlentilles holographiques, positionnée en dehors de la cellule à cristal liquide. On obtient de plus une simplification importante du procédé de réalisation du dispositif de visualisation par le fait de la suppression de filtres de couleurs.

Le procédé d'enregistrement de la matrice de lentilles holographiques décrit en relation avec les figures 2a et 2b prévoit d'utiliser une onde de référence OP plane. Cependant, cette onde peut également être non plane mais être calculée pour tenir compte de la répartition angulaire de la source d'illumination au niveau du modulateur spatial LCD.

Dans ce qui précède, on a décrit à titre d'exemple des dispositifs de visualisation trichrome mais l'invention est applicable à un dispositif de visualisation bichrome (bleu et vert par exemple) pour la projection à deux écrans de visualisation.

## Revendications

1. Dispositif de visualisation couleurs comportant :

   - au moins une source lumineuse (S) émettant un faisceau comportant au moins deux longueurs d'ondes primaires ($\lambda_0$, $\lambda_1$, $\lambda_2$); - un réseau (MLH) de lentilles holographiques (LH);
   - un modulateur spatial de lumière (LCD), comportant un pixel par lentille, chaque pixel comportant un sous-pixel par longueur d'onde primaire à visualiser ;

     chaque lentille (LH) du réseau (MLH) dispersant les différentes longueurs d'ondes dudit faisceau de façon à étaler spatialement le spectre du faisceau et focalisant chaque longueur d'onde primaire dans un sous-pixel d'un pixel.

2. Dispositif selon la revendication 1, caractérisé en ce que le modulateur spatial de lumière est unique.

3. Dispositif selon la revendication 1, caractérisé en ce que :

   - la source de lumière (S) émet au moins principalement trois longueurs d'ondes (R, V, B) correspondant chacune à une longueur d'onde primaire du spectre des couleurs ;
   - chaque lentille (LH) focalise dans le plan du modulateur spatial de lumière (LCD) une longueur d'onde intermédiaire entre les deux bandes spectrales primaires extrêmes (R, B) ;
   - le modulateur spatial de lumière (LCD) est orienté selon un plan perpendiculaire à l'axe optique du faisceau de longueur d'onde moyenne ou légèrement incliné selon un angle permettant d'obtenir le meilleur contraste du modulateur ;
   - chaque pixel du modulateur spatial de lumière comporte trois sous-pixels, chacun d'eux recevant de la lumière ayant une bande spectrale correspondant à une des primaires (R, V ou B) et qui est transmise par une lentille (LH).

4. Dispositif selon la revendication 3, caractérisé en ce que le modulateur est orienté selon un plan perpendiculaire à l'axe optique des lentilles (LH) ou légèrement incliné par rapport à cet axe.

5. Dispositif selon la revendication 3, caractérisé en ce que la longueur d'onde moyenne est contenue dans l'une des trois bandes spectrales (R, V, B).

6. Dispositif selon la revendication 1, caractérisé en ce que le modulateur spatial de lumière (LCD) est un écran à cristal liquide.

7. Dispositif selon la revendication 1, caractérisé en ce que le réseau (MLH) de lentilles holographiques (LH) est un réseau de lentilles cylindriques parallèles entre elles et juxtaposées.

8. Dispositif selon la revendication 1, caractérisé en ce que le réseau (MLH) de lentilles holographiques (LH) est une matrice de lentilles sphériques.

9. Dispositif selon la revendication 1, caractérisé en ce que le réseau (MLH) de lentilles holographiques est éclairé par la source (S) de telle façon qu'elles puissent fonctionner aux conditions de Bragg pour ladite longueur d'onde ($\lambda_0$).

10. Dispositif selon la revendication 1, caractérisé en ce qu'il comporte deux réseaux de lentilles holographiques (MLH1, MLH2), accolés un premier réseau diffractant 100 % de la lumière à une longueur d'onde (B) la plus faible et 50 % de la lumière à une longueur d'onde moyenne (V), un deuxième réseau diffractant 100 % de la lumière à une longueur d'onde (R) la plus élevée et 50 % de la lumière à la longueur d'onde moyenne (V).

11. Dispositif selon la revendication 1, caractérisé en ce que chaque lentille (LH) comporte deux lentilles élémentaires (LH1, LH2), les deux lentilles élémentaires diffractant chacune ladite longueur d'onde ($\lambda_0$) selon des faisceaux focalisant en des points décalés spatialement dans le plan de focalisation.

12. Procédé de réalisation d'un dispositif de visualisation couleurs, caractérisé en ce que :

    - on réalise une couche d'un matériau holographique ;

- on fait interférer dans la couche de matériau holographique une première onde lumineuse de référence (OP) et au moins une onde lumineuse cylindrique ou sphérique (OS) toutes deux de même longueur d'onde d'enregistrement réalisant ainsi au moins une lentille holographique (LH) pouvant être relu par une deuxième onde lumineuse à une autre longueur d'onde dans des conditions proches des conditions de Bragg ;

- on associe un modulateur spatial de lumière (LCD) dans le plan de focalisation de la lentille holographique correspondant à une longueur d'onde choisie, ledit modulateur spatial comportant autant de pixels qu'il y a de lentilles (LH), chaque pixel comportant autant de sous-pixels qu'il y a de couleurs primaires, le sous-pixel central de chaque pixel étant situé au point de focalisation de l'onde ayant une longueur d'onde sensiblement équivalente à la longueur d'onde centrale du spectre visible et le plan du modulateur spatial de lumière étant perpendiculaire à l'axe optique de cette onde.

13. Procédé selon la revendication 12, caractérisé en ce que l'onde lumineuse de référence (OP) et l'onde lumineuse cylindrique ou sphérique ont une longueur d'onde sensiblement égale à la moyenne des longueurs d'ondes à visualiser.

14. Procédé selon la revendication 12, caractérisé en ce que la deuxième onde lumineuse est similaire en direction et en longueur d'onde à l'onde lumineuse de référence (OP).

15. Procédé selon la revendication 12, caractérisé en ce que l'onde lumineuse de référence est une onde plane.

16. Procédé selon la revendication 12, caractérisé en ce que l'onde de référence est calculée de manière à prendre en compte la répartition angulaire de la source d'illumination au niveau du LCD.

**Patentansprüche**

1. Vorrichtung zur farblichen Anzeige,

- mit mindestens einer Lichtquelle (S), die einen Lichtstrahl aussendet, der mindestens zwei Primärwellenlängen ($\lambda_0$, $\lambda_1$, $\lambda_2$) besitzt,
- mit einem Netz (MLH) von holographischen Linsen (LH),
- mit einem räumlichen Lichtmodulator (LCD), der einen Bildpunkt je Linse besitzt, wobei jeder Bildpunkt für jede anzuzeigende Primärwellenlänge ein Unter-Pixel besitzt und wobei jede Linse (LH) des Netzes (MLH) die verschiedenen Wellenlängen des Strahls so beugt, daß das Spektrum des Strahls räumlich aufgespreizt wird und jede Primärwellenlänge in einem Unter-Pixel eines Bildpunkts fokussiert wird.

2. Vorrichtung nach Anspruch 1, dadurch gekennzeichnet, daß der räumliche Lichtmodulator ein gemeinsamer Modulator ist.

3. Vorrichtung nach Anspruch 1, dadurch gekennzeichnet,

- daß die Lichtquelle (S) mindestens hauptsächlich drei Wellenlängen (R, V, B) entsprechend je einer der Primärwellenlängen des Farbspektrums aussendet,
- daß jede Linse (LH) eine zwischen den beiden extremen primären Spektralbändern (R, B) liegende Wellenlänge in der Ebene des räumlichen Lichtmodulators (LCD) fokussiert,
- daß der räumliche Lichtmodulator (LCD) in einer Ebene senkrecht zur optischen Achse des Strahls der mittleren Wellenlänge oder leicht geneigt gemäß einem Winkel orientiert ist, der einen besseren Kontrast des Modulators ergibt,
- und daß jeder Bildpunkt des räumlichen Lichtmodulators drei Unter-Pixel enthält, die je das Licht in einem Frequenzband entsprechend einer der Primärfarben (R, V, B) empfängt, das von einer Linse (LH) übertragen wird.

4. Vorrichtung nach Anspruch 3, dadurch gekennzeichnet, daß der Modulator gemäß einer Ebene senkrecht zur optischen Achse der Linsen oder leicht bezüglich dieser Achse geneigt angeordnet ist.

5. Vorrichtung nach Anspruch 3, dadurch gekennzeichnet, daß die mittlere Wellenlänge in einem der drei Spektralbänder (R, V, B) enthalten ist.

6. Vorrichtung nach Anspruch 1, dadurch gekennzeichnet, daß der räumliche Lichtmodulator (LCD) ein Flüssigkristallschirm ist.

7. Vorrichtung nach Anspruch 1, dadurch gekennzeichnet, daß das Netz (MLH) von holographischen Linsen (LH) ein Netz von zueinander parallelen und nebeneinander liegenden zylindrischen Linsen ist.

8. Vorrichtung nach Anspruch 1, dadurch gekennzeichnet, daß das Netz (MLH) von holographischen Linsen (LH) eine Matrix von sphärischen Linsen ist.

9. Vorrichtung nach Anspruch 1, dadurch gekennzeichnet, daß das Netz (MLH) von holographische Linsen durch die Quelle (S) so beleuchtet wird, daß die Linsen unter den Bragg-Bedingungen für die Wellenlänge ($\lambda_0$) arbeiten können.

10. Vorrichtung nach Anspruch 1, dadurch gekennzeichnet, daß sie zwei aneinander liegende Netze (MLH1, MLH2) von holographischen Linsen aufweist, von denen das erste das Licht mit einer kleinsten Wellenlänge (B) zu 100% und das Licht mit einer mittleren Wellenlänge (V) zu 50% beugt, während das zweite Netz das Licht mit einer größten Wellenlänge (R) zu 100% und das Licht mit der mittleren Wellenlänge (V) zu 50% beugt.

11. Vorrichtung nach Anspruch 1, dadurch gekennzeichnet, daß jede Linse (LH) zwei Elementarlinsen (LH1, LH2) besitzt, die je die Wellenlänge ($\lambda_0$) in Strahlen beugt, die in in der Brennebene räumlich versetzten Punkten fokussiert werden.

12. Verfahren zur Herstellung einer farblichen Anzeigevorrichtung, dadurch gekennzeichnet,

- daß eine Schicht aus einem holographischen Material gebildet wird,
- daß man in der Schicht aus holographischem Material eine erste Bezugslichtwelle (OP) und mindestens eine zylindrische oder sphärische Lichtwelle (OS) zur Interferenz bringt, wobei beide die gleiche Aufzeichnungswellenlänge besitzen, sodaß sich mindestens eine holographische Linse (LH) ergibt, die von einem zweiten Lichtstrahl bei einer anderen Wellenlänge unter Bedingungen nahe den Bragg-Bedingungen gelesen werden kann,
- und daß man einen räumlichen Lichtmodulator (LCD) in die Brennebene der holographischen Linse entsprechend einer gewählten Wellenlänge bringt, der ebenso viele Bildpunkte besitzt, wie es Linsen (LH) gibt, wobei jeder Bildpunkt ebenso viele Unter-Pixel enthält, wie es Primärfarben gibt und das zentrale Unter-Pixel jedes Bildpunkts im Brennpunkt der Welle mit einer Wellenlänge liegt, die im wesentlichen der zentralen Wellenlänge des sichtbaren Lichts äquivalent ist, und wobei die Ebene des räumlichen Lichtmodulators senkrecht zur optischen Achse dieser Welle verläuft.

13. Verfahren nach Anspruch 12, dadurch gekennzeichnet, daß die Bezugslichtwelle (OP) und die zylindrische oder sphärische Lichtwelle eine Wellenlänge besitzen, die im wesentlichen dem mittleren Wert der anzuzeigenden Wellenlängen gleicht.

14. Verfahren nach Anspruch 12, dadurch gekennzeichnet, daß die zweite Lichtwelle hinsichtlich der Richtung und der Wellenlänge der Bezugswellenlänge (OP) ähnelt.

15. Verfahren nach Anspruch 12, dadurch gekennzeichnet, daß die Bezugslichtwelle eine ebene Welle ist.

16. Verfahren nach Anspruch 12, dadurch gekennzeichnet, daß die Bezugswelle so berechnet wird, daß die winkelmäßige Verteilung der Lichtquelle in Höhe des LCD-Schirms berücksichtigt wird.

**Claims**

1. Colour display device, comprising:

   - at least one light source (S) emitting a beam comprising at least two primary wavelengths ($\lambda_0$, $\lambda_1$, $\lambda_2$);
   - an array (HML) of holographic lenses (HL);
   - a spatial light modulator (LCD) comprising one pixel per lens, each pixel comprising one subpixel per primary wavelength to be displayed;

   each lens (HL) of the array (HML) dispersing the various wavelengths of the said beam, so as to spread out the spectrum of the beam spatially, and focusing each primary wavelength onto a subpixel of a pixel.

2. Device according to Claim 1, characterized in that there is just one spatial light modulator.

3. Device according to Claim 1, characterized in that:

   - the light source (S) emits at least mainly three wavelengths (R, G, B) each corresponding to a primary wavelength of the colour spectrum;
   - each lens (HL) focuses a wavelength intermediate between the two extreme primary spectral bands (R, B) in the plane of the spatial light modulator (LCD);
   - the spatial light modulator (LCD) is oriented in a plane perpendicular to the optical axis of the mean-wavelength beam or slightly inclined at an angle enabling the best contrast of the modulator to be obtained;
   - each pixel of the spatial light modulator comprises three subpixels, each of them receiving light having a spectral band which corresponds to one of the primaries (R, G or B) and is transmitted by a lens (HL).

4. Device according to Claim 3, characterized in that the modulator is oriented in a plane perpendicular to the optical axis of the lenses (HL) or slightly inclined with respect to this axis.

**5.** Device according to Claim 3, characterized in that the mean wavelength lies within one of the three spectral bands (R, G, B).

**6.** Device according to Claim 1, characterized in that the spatial light modulator (LCD) is a liquid-crystal screen.

**7.** Device according to Claim 1, characterized in that the array (HML) of holographic lenses (HL) is an array of mutually parallel and juxtaposed cylindrical lenses.

**8.** Device according to Claim 1, characterized in that the array (HML) of holographic lenses (HL) is a matrix of spherical lenses.

**9.** Device according to Claim 1, characterized in that the array (HML) of holographic lenses is illuminated by the source (S) in such a way that they can operate at the Bragg conditions for the said wavelength $(\lambda_0)$.

**10.** Device according to Claim 1, characterized in that it comprises two juxtaposed arrays (HML1, HML2) of holographic lenses, a first array diffracting 100% of the light at a shortest wavelength (B) and 50% of the light at a mean wavelength (G) and a second array diffracting 100% of the light at a longest wavelength (R) and 50% of the light at the mean wavelength (G).

**11.** Device according to Claim 1, characterized in that each lens (HL) comprises two elementary lenses (HL1, HL2), the two elementary lenses each diffracting the said wavelengths $(\lambda_0)$ into beams that are focused at points spatially offset in the focal plane.

**12.** Method of producing a colour display device, characterized in that:

- a layer of a holographic material is produced;
- a first, reference light wave (PW) and at least one cylindrical or spherical light wave (SW) are made to interfere in the layer of holographic material, both these waves having the same recording wavelength, thus producing at least one holographic lens (HL) which can be read again by a second light wave at another wavelength in conditions close to the Bragg conditions;
- a spatial light modulator (LCD) is associated in the focal plane of the holographic lens corresponding to a chosen wavelength, the said spatial modulator comprising as many pixels as there are lenses (HL), each pixel comprising as many subpixels as there are primary colours, the central subpixel of each pixel being located at the focal point of the wave having a wavelength substantially equivalent to the central wavelength of the visible spectrum and the plane of the spatial light modulator being perpendicular to the optical axis of this wave.

**13.** Method according to Claim 12, characterized in that the reference light wave (PW) and the cylindrical or spherical light wave have a wavelength substantially equal to the mean of the wavelengths to be displayed.

**14.** Method according to Claim 12, characterized in that the second light wave is similar, in terms of direction and of wavelength, to the reference light wave (PW).

**15.** Method according to Claim 12, characterized in that the reference light wave is a plane wave.

**16.** Method according to Claim 12, characterized in that the reference wave is calculated so as to take into account the angular distribution of the illumination source in the region of the LCD.

FIG.1

FIG.2a

FIG.2b

FIG.3

FIG.4

EP 0 677 230 B1

FIG.5

FIG.6

FIG.7

FIG.8